# EUROPEAN PATENT APPLICATION

(11) **EP 2 851 836 A2**
(43) Date of publication of application: **25.03.2015**
(21) Application number: 14185524.7
(22) Date of filing: 19.09.2014
(51) Int. Cl.: G06F 21/62

(54) **Mitigating policy violations through textual redaction**

(30) Priority: 23.09.2013 GB 201316879
(71) Applicant: Clearswift Limited, Reading, Berkshire RG7 4SA (GB)
(72) Inventor: Schofield, Kevin Charles, Thatcham, Berkshire RG18 3GB (GB)
(74) Representative: O'Connell, David Christopher

(57) **Abstract**

A method of applying a policy comprises receiving a text and applying the policy to the text. If the policy is violated, the method further comprises redacting the text; reapplying the policy to the redacted text. In response to a result of reapplying the policy to the redacted text action is taken as determined by the policy.

## Description

This invention relates to data handling, and in particular to a method and system for applying policies to such data, and for mitigating the effects of policy violations in textual content.

In electronic mail systems, it is common to apply policies to messages that are sent. That is, a system administrator is able to set various rules, and a policy manager in the system tests whether a message complies with those rules. If the message complies with the rules, then the message is sent to the intended destination. However, if the message does not comply with the rules, the policy can determine the action that is to be taken.

For example, the action that is taken in the event of a policy violation might be discarding the message, quarantining the message and sending a warning to the sender and/or intended recipient of the message, or the like.

It is also known that, in the case of textual documents, redaction can be applied to the document, so that sensitive content is removed. For example, when a document contains personal information, such as customer names, credit card numbers, or the like, that information can be removed before the document is released.

According to a first aspect of the present invention, there is provided a method of applying a policy, comprising: receiving a text; applying the policy to the text; if the policy is violated, redacting the text; reapplying the policy to the redacted text; and taking action determined by the policy, in response to a result of reapplying the policy to the redacted text.

This has the advantage that redaction can be performed but that, if some of the text is unredactable for some reason, it can be determined whether the partially redacted text complies with the policy or not.

According to a second aspect of the present invention, there is provided a computer program product, comprising instructions for performing the method of the first aspect.

For a better understanding of the present invention, and to show how it may be put into effect reference will now be made, by way of example only, to the accompanying drawings, in which:-
Figure 1 is a schematic diagram of a computer network in accordance with an aspect of the present invention; and
Figure 2 is a flow chart illustrating a method in accordance with an aspect of the invention.

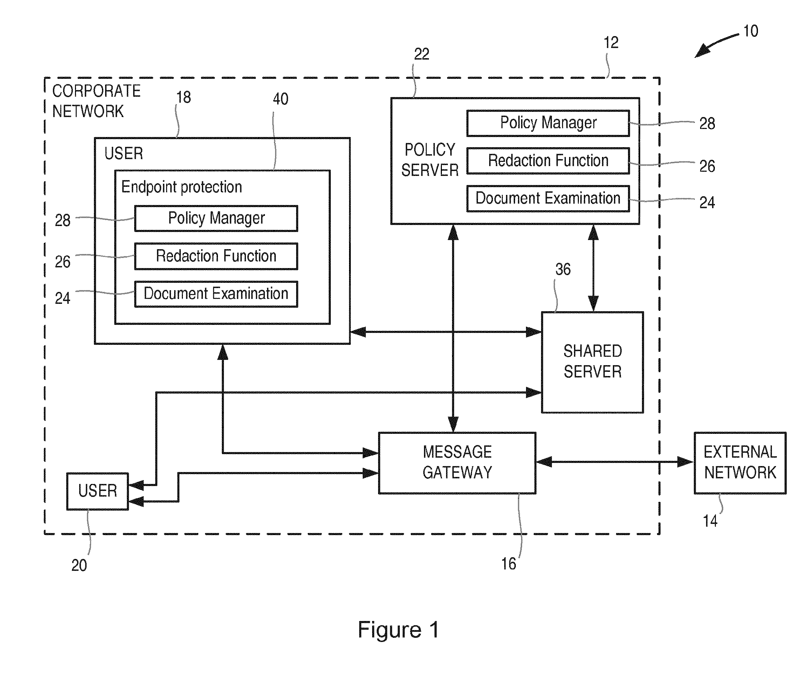

Figure 1 shows a part of a computer network 10. Specifically, Figure 1 shows a part of a corporate network 12, having a connection to an external network 14. In one embodiment, the corporate network 12 may for example be a local area network (LAN) within an organisation, but it will be appreciated that the methods described herein could be applied in other situations. For example, the method described herein could be implemented in a non-corporate network, such as within a service provider's network, or in secured wireless communications such as naval ship to shore. Similarly, the external network 14 could for example be the internet, but it will be appreciated that the methods described herein could be applied in other situations, for example in a cross-domain scenario, where there are two local area networks of different security levels (for example "secret" and "top secret") and email needs to pass between the networks in a controlled manner.

In the illustrated network, the corporate network 12 includes a message gateway 16, through which all electronic mail messages are passed. Figure 1 also shows users 18, 20 on the corporate network 12. Of course, there will be many more than two users in a typical network, but it is sufficient to show two such users to illustrate the operation of the method. The users 18, 20 may be connected to the corporate network through wireless connections, Ethernet connections, or any other suitable wired connection.

The users 18, 20 are able to send and receive electronic mail messages to and from each other, and to and from other users on the corporate network 12 that are not shown in Figure 1, and to and from other users on the external network 14. All such messages are passed through the message gateway 16.

Although only one such message gateway is shown in this example, it will be appreciated that typical corporate networks may have more complex structures. For example, there may be one message gateway for handling internal mail messages between users on the network, and a separate message gateway for handling external mail messages between a user on the network and a user on the external network. However, the illustrated architecture is sufficient for an explanation of the present invention.

Figure 1 also shows a policy server 22, connected to the message gateway 16. As will be understood, the policy server applies message policies to messages passing through the message gateway 16. In an architecture with multiple message gateways, there may be a policy server associated with each gateway, or there may be a single policy server associated with multiple message gateways.

As described in more detail below, the policy server 22 includes at least a document examination block 24, a redaction function 26, and a policy manager 28. In general terms, the purpose of the policy server 22 is to enforce policies that are set by, for example, a system administrator of the corporate network 12. For example, such policies may prohibit the sending of certain messages between certain users, or at least place conditions on the sending of such messages. The policy server may include a processor and a memory, containing instructions for causing the policy server to perform the described functions.

The network 12 may also include a shared server 36, such that a user can upload a file to the shared server, for later download by another user. The policy server 22 is also able to enforce policies relating to such file transfers. For example, such policies may prohibit the storage of certain files on a removable storage device, or may prohibit the transfer of certain files from such a device, or may at least place conditions on such activities, with the files being identified based on their textual content.

Figure 1 also shows one user device 18 being provided with an endpoint protection product 40, of a type which is intended for deployment on a desktop or laptop computer, or the like. The endpoint protection product 40 is shown in Figure 1 as including similar functions to those included in the policy server 22, namely a document examination block 24, a redaction function 26, and a policy manager 28. In general terms, one purpose of the endpoint protection product 40 is to enforce policies relating to the transfer of information between the user 18 to and from removable storage devices such as optical storage discs (for example, CDs, DVDs, etc) and memory sticks. For example, such policies may prohibit the storage of certain files on a removable storage device, or may prohibit the transfer of certain files from such a device, or may at least place conditions on such activities, with the files being identified based on their textual content. The user device may include a processor and a memory, containing instructions for causing the policy server to perform the described functions.

In the case of the policy server 22, the policies may for example relate to messages that contain specified file types as attachments, or that exceed a specified size. In this illustrated example, the policies relate to the information content of a message. More specifically, the policies may relate equally to the information content of the body of an email message, to the information content of an attachment to an email message, and/or to the information content of the metadata of an email message such as the subject. Furthermore, policies may relate equally to different aspects of a structured format used within the email body or attachment including but not limited to the main body text, page headers and footers, footnotes, endnotes, annotations, textboxes and metadata.

The policies may determine whether a particular message can be sent or delivered as intended by its originator.

In the case of the endpoint protection product 40, the policies may relate to the textual content of any file that the user seeks to transfer.

The policies may determine whether a file can be uploaded or downloaded as intended by the user.

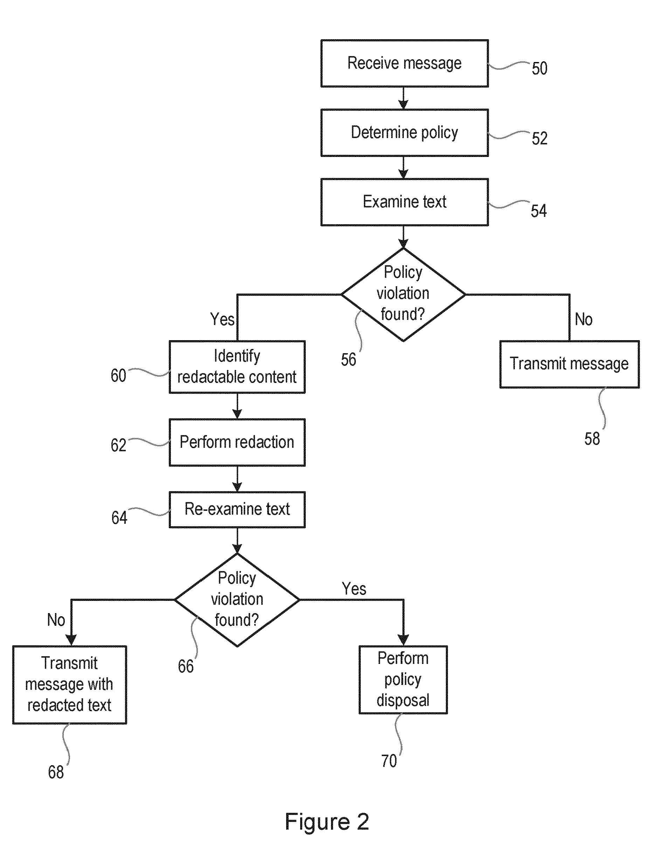

Figure 2 is a flow chart, illustrating a process performed by software running on the policy server 22, in order to implement policies related to the content of electronic mail messages. The same process is performed by the software of the endpoint protection product 40. More generally, the method can be implemented by a computer program product, provided on any transitory or non-transitory medium, containing instructions for causing a programmed device to perform the method described herein.

Although the invention is described herein with reference to a specific example in which the process is applied in order to implement policies related to the content of electronic mail messages, the same or similar techniques can be used to implement policies relating to the content of web traffic, or more generally to policies that control any disclosure of information. For example, policies can be used to control the transfer of information using file transfer methods, or instant messaging, and can also be used to control the transfer of information in document management and publishing systems.

In step 50, a message is received, having some textual content, either in the body of the message, and/or in an attachment to the message (including in structural constructs such as page headers and footers, footnotes and endnotes of the message or its attachment), and/or in the message metadata. In other embodiments, the text may be present in a file that is intended to be transferred, or in web traffic. Generally, the text can be present in any information intended to be transferred.

In step 52, it is determined which policy or policies apply to the message. For example, the policy manager may have been configured such that messages sent between any member of a first group of users and any member of a second group of users may not contain content of a certain type, while messages sent between any member of a third group of users and any member of a fourth group of users may not contain content of a different type. Purely as an example, a first policy may specify that messages sent from members of a company's finance team to members of the company's marketing team may not contain any payment card numbers (i.e. sixteen digit numbers, especially when divided into four blocks of four digits); a second policy may specify that messages sent from members of the company's engineering team to recipients outside the company may not refer to the name of a secret internal project; and a third policy may specify that messages sent from any user must not contain profanity.

When the received text forms part of some content that is being downloaded from a website, in the use of a web browser program for example, or forms part of some content that is being uploaded to a website, the policy or policies that apply to the text will typically be based on the user who is requesting the transfer, possibly amongst other factors. More generally, in this example the text may be received as part of an upload to, or a download from, any external network.

More generally, it is known that policies may attempt to deal with issues such as: controlling offensive material; controlling the disclosure of intellectual property; and controlling the disclosure of sensitive information including Personal Identifiable Information (PII), Payment Card Information (PCI) and Corporate Infrastructure Information (CII) such as usernames, IP addresses, machine names and URLs.

Thus, in step 52, it is determined, for example based on the identities of the sender and recipient (but potentially also based on other information) which policies apply to the received message.

In step 54, the relevant textual content is examined, to determine whether it complies with the applicable policies.

First, the relevant text is identified. As mentioned above, the policy may for example be set such that the text in the body of the message is examined, that the text in any attachment to the message is examined and/or the text within the message metadata is examined. This may involve the identification of the format of any attachments and performing any decomposition such as extracting files from within an archive and continuing this identification/decomposition process in a recursive manner. The identification of the format and examination of structured formats for the presence of aspect such as page headers and footers being used to identify text that is relevant to the policy. For example, a policy may specify that specific text should not appear in the page footer of a document and the relevant text could be found in the page footer of a word processing document which is within a ZIP archive that has been attached to an email message.

Having identified the relevant text from the message, in step 54 the relevant textual content is examined to determine whether the information is acceptable, that is, conforms to a policy.

For example, this may be done by tokenising the text (that is, dividing the text into smaller components, such as words), and then searching the tokens for specific tokens or combinations of tokens. Combinations could be simple sequences that form a phrase, or token sequences that are combined with logical operations such as "AND" and "OR" and positional/proximity operations such as "BEFORE", "AFTER" and "NEAR". This search construct is known as an expression.

Using a technique known as Text Entity Extraction it is also possible to identify higher order information within the textual content; for example, names, dates, Credit Card Numbers, National Insurance Numbers and Social Security Numbers; by examining the tokens. Text Entities such as these can also be used in place of tokens within the expressions.

Similarly, regular expressions can take the place of tokens within a search.

When dealing with sensitive information (such as Personal Identifiable Information, Payment Card Information, or Corporate Infrastructure Information as discussed above), it may be that any match of a Social Security Number, Credit Card Number or IP address is all that is needed to determinate that the policy has been violated.

When dealing with offensive material, the presence of a single token or combination of tokens might not be enough for the text as a whole to be considered unacceptable, but a combination of tokens repeated enough times, or the presence of certain tokens in the presence of other tokens might be enough for the text to be considered unacceptable.

As an example, a policy may be defined in terms of an expression list that consists of a set of entries, each of which consists of an expression with an associated weighting. The weighting can have a positive integer value or a special violation value. A threshold value is also set.

An initial score is set to zero, and the textual content is tokenised and any Text Entities are identified. The tokens and Text Entities are then searched to determine, for each expression in the expression list, whether it matches the textual content. When a match is found, the weighting for the relevant expression is added to the score. If the weighting is the special violation value, then the score is set to the threshold value of the expression list.

In step 56 of the process shown in Figure 2, after all of the expressions have been used as the basis for the search, the final score is examined. If the score is greater than or equal to the threshold value, then it is determined that the policy has been violated.

If it is found that the policy has not been violated, then the process passes to step 58, and the message is transmitted as intended by the sender. In embodiments where the policies relate to the content of web traffic, or to other policies that control other disclosures of information, and it is found that the policy has not been violated, then the file or other information can be transferred as intended by the user of the system.

However, if it is found in step 56 that transmitting the message would violate the policy, the process passes to step 60. The intention here is to mitigate the policy violation, such that the message can still be sent.

Thus, in step 60, the redactable text in the message is identified. Then, the process passes to step 62, in which an attempt is made to mitigate every match of every expression in the expression list. A match is mitigated by redacting each of the tokens and Text Entities that form the match. When a Text Entity is formed from a number of tokens, it can be redacted by redacting the constituent tokens.

Redaction can take a number of forms such as replacing each character with a blanking character such as an 'X' or a '*'; replacing the token or Text Entity with a word that describes the token such as 'NAME' or 'DATE'; or a fixed pattern of characters such as '0.0.0.0'. Text Entities might just have some of their characters blanked; for example, in the case of a Credit Card Number all but the last four digits may be blanked.

To facilitate redacting tokens, it is necessary to link each token with the characters within the actual content. As many different document formats, as well as plain text, must be redacted, the means by which this linking takes place may differ with each format. ,One such method is to record the extent of the token within the actual content, either by recording an offset to the start of the token and the length of the token, or by recoding a pair of offsets to the start and end of the token. When each character within the token is blanked, the actual content within the token is examined to determine the position and extent of that character, and a set of changes is generated which will yield the redacted character when applied to the actual content. This process is repeated for each character that is to be blanked. For efficiency the set of changes required to blank a sequence of characters can be calculated in one pass. It is important that the set of changes are applied in a transactional manner, that is, either all of the changes are applied successfully or none of the changes are applied. The examination of the original content and generation of the changes must cater for various factors, such as character encodings and escape sequences that represent a single character such as character and entity references in HTML and XML. In addition, the characters within a token may be interspersed with non-displayable content, for example markup in HTML, which must be skipped in order to maintain the integrity of the redacted content. When using a replacement word to redact the token, a similar technique is employed but a different set of changes is generated; in this case the same considerations must be observed when examining the actual content to be changed.

Another consideration when redacting a token is that, in some formats, various character encodings can be used either for the entire content or for sections of the content. Indeed, it is possible for the character encoding to switch in the middle of a token in some formats. In such cases, the redaction process should preferably ensure that each replacement character is encoded using the same encoding as the character that it replaces.

The expression list may contain, for some or all of its entries, instructions to indicate what form of redaction should take place in order to mitigate any violation caused by the use of the relevant expression.

The form that the redaction should take is dependent upon the nature of the text and the context in which it is being used; it is therefore advantageous that the redaction process can be controlled via the policy. For example, when a text contains a credit card number and an associated expiry date, it may be appropriate in some business contexts that the credit card number is redacted but the associated expiry date is not. One way in which this can be accomplished is to embed a unary operator within the expression, which marks the following sub-expression such that any matches to that sub-expression will be redacted but matches to other sub-expressions will not. For example, an expression of the form ".REDACT..TextEntity=CreditCardNumber. .NEAR..TextEntity=Date." would result in any credit card numbers being redacted but any dates near them would not be redacted. Alternatively, an expression of the form ".REDACT. (.TextEntity=CreditCardNumber..NEAR..TextEntity=Date.)" would result in both the credit card numbers and any dates near to them being redacted.

An issue arises in that not all textual content of messages is amenable to being redacted. For example, some document formats may not permit redaction, or other circumstances may prevent redaction. One specific example of such a situation is when redacting document metadata, where information such as an integer cannot be blanked or replaced with alternative text without compromising the integrity of the document. Another specific example arises if a message has been digitally signed by the sender. In that case, while it may be possible to examine the text and identify a need for redaction, it would not be possible to apply the sender's digital signature to the redacted text, and it would not be appropriate to send the message without this when the sender has considered it necessary. It is therefore impossible to transmit the message in a redacted form, and so the redaction is not possible.

Once the possible redactions have been performed, the process passes to step 64, in which the text resulting from the redaction in step 62 is re-examined.

The re-examination performed in step 64 can take the same form as the examination of the text performed in step 54 described above, although it would of course be expected in most cases that the effect of the redaction performed in step 62 would be to reduce the number of occasions on which an expression in the expression list matches the textual content.

It is then determined in step 66 of the process shown in Figure 2, after the re-examination has been performed, whether the final score is greater than or equal to the threshold value, in the same manner as described with reference to step 56. If the score is greater than or equal to the threshold value, then it is determined that the policy would be violated by the transmission of the message.

If it is found in step 66 that the policy would not be violated by the transmission of the message, then the process passes to step 68, and the message is transmitted to the recipient intended by the sender, with the text resulting from the redaction. Again, in embodiments where the policies relate to the content of web traffic, or to other policies that control other disclosures of information, and it is found that the policy would not be violated by the transfer of the information after redaction, then the file or other information can be transferred as intended by the user of the system after the redaction has taken place.

However, if it is found in step 66 that transmitting even the redacted message would violate the policy, the process passes to step 70, in which case a disposal is performed in accordance with the policy. For example, the policy may state that the message should simply be discarded, or may state that the message may not be transmitted but that a notification should instead be sent to the sender and/or intended recipient of the message. Where the policy violation arises because of the textual content of an attachment to the message, the policy may allow the message to be sent without the relevant attachment.

In embodiments where the policies relate to the content of web traffic, or to other policies that control other disclosures of information, and it is found that the policy would still be violated by the transfer of the information after redaction, then the file may not be transferred as intended by the user of the system but, instead, a message may be displayed to the user, for example.

There is thus disclosed a method of policy enforcement that allows for improved results, particularly in the case where redaction is unable to make a text fully compliant with a policy.

## Claims

1. A method of applying a policy, comprising:
receiving a text in information that is intended to be transferred;
applying the policy to the text;
if the policy is violated, redacting the text;
reapplying the policy to the redacted text; and
taking action determined by the policy, to allow or prevent the transfer of the information, in response to a result of reapplying the policy to the redacted text.

2. A method as claimed in claim 1, comprising receiving the text in an electronic mail message, wherein the step of applying the policy to the text comprises determining at least one applicable policy based on a sender and a recipient of the electronic mail message.

3. A method as claimed in claim 1 or 2, comprising receiving the text in an electronic mail message, wherein the step of applying the policy to the text comprises determining whether an applicable policy applies to a message content and/or to an attachment of the message and/or to the information content of metadata of the electronic mail message.

4. A method as claimed in claim 1, comprising receiving the text in a download from an external network, wherein the step of applying the policy to the text comprises determining at least one applicable policy based on an identity of a user requesting the download.

5. A method as claimed in claim 1, comprising receiving the text in an upload to an external network, wherein the step of applying the policy to the text comprises determining at least one applicable policy based on an identity of a user requesting the upload.

6. A method as claimed in claim 1, comprising receiving the text in a download from a server, wherein the step of applying the policy to the text comprises determining at least one applicable policy based on an identity of a user requesting the download.

7. A method as claimed in claim 1, comprising receiving the text in an upload to a server, wherein the step of applying the policy to the text comprises determining at least one applicable policy based on an identity of a user requesting the upload.

8. A method as claimed in claim 1, comprising receiving the text in a data transfer to a removable storage device from a user device having an endpoint protection product.

9. A method as claimed in claim 1, comprising receiving the text in a data transfer from a removable storage device to a user device having an endpoint protection product.

10. A method as claimed in any preceding claim, wherein the step of applying the policy to the text comprises identifying redactable text in the received text.

11. A method as claimed in claim 10, wherein the step of redacting the text comprises:
identifying in the text a token that might be involved in a policy violation;
recording an extent of the token within the text content; and
determining a position and extent of each character within the token; and
blanking each character in the token.

12. A method as claimed in claim 11, comprising:
ensuring that every character in the token is blanked, or that that no character in the token is blanked; or
replacing the token that might be involved in a policy violation with a replacement word; or
blanking a subset of the characters in the token.

13. A method as claimed in any of claims 10 to 12, comprising identifying non-displayable content in redactable text, and retaining said non-displayable content during the redaction.

14. A method as claimed in any of claims 10 to 13, wherein the policy determines whether or not to redact sub-expressions in the text.

15. A computer program product, comprising instructions for causing a programmed device to operate in accordance with the method of any preceding claim.
